# EUROPEAN PATENT APPLICATION

(11) **EP 2 323 290 A1**
(43) Date of publication of application: **18.05.2011**
(21) Application number: 09817407.1
(22) Date of filing: 10.09.2009
(51) Int. Cl.: H04H 60/40, H04B 1/16, H04H 20/91, H04H 40/09, H04N 7/173

(54) **DIGITAL BROADCAST RECEIVING DEVICE AND DIGITAL BROADCAST RECEIVING METHOD**

(30) Priority: 30.09.2008 JP 2008253150
(71) Applicant: Panasonic Corporation, Kadoma-shi Osaka 571-8501 (JP)
(72) Inventor: SUZUKI, Tatsuya, Osaka-shi Osaka 540-6207 (JP)
(74) Representative: Grünecker, Kinkeldey, Stockmair & Schwanhäusser Anwaltssozietät
(86) International application number: PCT/JP2009/004486
(87) International publication number: WO 2010/038363

(57) **Abstract**

The digital broadcast receiving device includes a receiving section for acquiring contents and notification data of software download from a received digital broadcast signal, a storage section for storing the notification data of the software download and the digital broadcast channel including the notification data, a clock section for measuring time, and a control section for making the receiving section acquire the contents and for executing the acquired contents according to the measured time and time information that is included in the stored notification data. In the subsequent power-on operation after a power-off operation, the control section makes the receiving section receive the stored digital broadcast signal and acquires time information included in the received digital broadcast signal. The clock section updates the measured time based on the time information.

## Description

### TECHNICAL FIELD

) The present invention relates to a digital broadcast receiving device and a digital broadcast receiving method, and more specifically to a digital broadcast receiving device and digital broadcast receiving method for selecting a predetermined channel at a predetermined time.

### BACKGROUND ART

) A digital broadcast receiving device conventionally determines a delivery period of software download (hereinafter referred to as "SDL") based on notification data of the SDL when the software download is executed. When the delivery period comes during digital broadcast receiving operation, the digital broadcast receiving device selects a channel (hereinafter referred to as "SDL channel") of the digital broadcast including SDL contents. Technology of acquiring SDL contents in this manner in the conventional digital broadcast receiving device is known (patent literature 1).

) The conventional digital broadcast receiving device disclosed in patent literature 1, in order to determine whether the delivery period of the SDL comes, compares the SDL execution time included in SDL notification data with the time inside the digital broadcast receiving device. When the time inside the digital broadcast receiving device is incorrect, the digital broadcast receiving device cannot correctly determine the delivery period of the SDL contents. As a result, selection of an SDL channel is failed when the SDL contents are started to be delivered, disadvantageously.

) Time information for controlling time inside the digital broadcast receiving device is delivered in a broadcast, similarly to the SDL notification data. The conventional digital broadcast receiving device acquires the time information of a viewed channel, and adjusts the time inside the digital broadcast receiving device based on the time information. However, when the power supply of the digital broadcast receiving device is turned off, for example, the time information is lost. Therefore, it is required that the time information is always acquired when the power supply is turned on and the time inside the digital broadcast receiving device is adjusted. At this time, when incorrect time information is received, the time inside the digital broadcast receiving device gets out of order. For example, in some foreign countries, the contents of the delivered time information depend on a delivering broadcast station. As a result, the time inside the digital broadcast receiving device that is adjusted based on the time information of a broadcast station except the SDL channel cannot be used as the reference for the time information of the SDL notification data. Therefore, the conventional digital broadcast receiving device cannot correctly determine the delivery start time of the SDL contents.

### CITATION LIST

### [Patent Literature]

)
[Patent Literature 1] Unexamined Japanese Patent Publication No. 2008-148231

### SUMMARY OF THE INVENTION

) A digital broadcast receiving device of the present invention has a receiving section, a storage section, a clock section, and a control section. The receiving section receives a digital broadcast signal, and acquires contents of software download and notification data of the software download from the received digital broadcast signal. The storage section stores the notification data of the software download, and the digital broadcast channel (as a software download channel) where a digital broadcast signal including the notification data of the software download is specified. The clock section measures time. According to the measured time and time information that is included in the stored notification data of the software download, the control section makes the receiving section receive the software download channel and acquire the contents of the software download, and executes the acquired contents of the software download.

) In the subsequent power-on operation after a power-off operation, the control section makes the receiving section receive the software download channel stored in the storage section. The control section acquires the time information included in the received digital broadcast signal, and updates the time measured by the clock section based on the time information included in the acquired software download channel.

) In this configuration, by using the time information in the SDL channel, the execution period of the SDL can be correctly determined, and the acquirability of the SDL contents can be improved.

) A digital broadcast receiving method of the present invention includes a receiving step, a storage step, a measuring step, a time updating step, and a content executing step.

) The receiving step includes receiving a digital broadcast signal and acquiring notification data of the software download from the received digital broadcast signal. The storage step includes storing the notification data of the software download, and the digital broadcast channel (as a software download channel) where a digital broadcast signal including the notification data of the software download is specified. The measuring step includes measuring time. The time updating step includes receiving the software download channel stored in the storage section with the receiving section, in the subsequent power-on operation after a power-off operation. The time updating step includes updating the time measured by the clock section based on the time information included in the received digital broadcast signal. The content executing step includes receiving the software download channel with the receiving section according to the updated time and the stored time information that is included in the notification data of the software download. The content executing step includes acquiring the contents of the software download and executing the acquired contents of the software download.

### BRIEF DESCRIPTION OF DRAWINGS

)
Fig. 1 is a block diagram showing a configuration of a digital broadcast receiving device in accordance with a first exemplary embodiment of the present invention.
Fig. 2 is a diagram showing a data format of notification data of SDL in accordance with the first exemplary embodiment of the present invention.
Fig. 3 is a diagram showing a packet structure of a transport stream (TS) in accordance with the first exemplary embodiment of the present invention.
Fig. 4 is a flowchart showing the acquiring processing of the notification data of the SDL in accordance with the first exemplary embodiment of the present invention.
Fig. 5 is a flowchart showing power-on processing in accordance with the first exemplary embodiment of the present invention.
Fig. 6 is a block diagram showing a configuration of a digital broadcast receiving device in accordance with a second exemplary embodiment of the present invention.
Fig. 7 is a flowchart showing the acquiring processing of the notification data of the SDL in accordance with the second exemplary embodiment of the present invention.
Fig. 8 is a flowchart showing power-on processing in accordance with the second exemplary embodiment of the present invention.

### DETAILED DESCRIPTION OF PREFERRED EMBODIMENTS

### (FIRST EXEMPLARY EMBODIMENT)

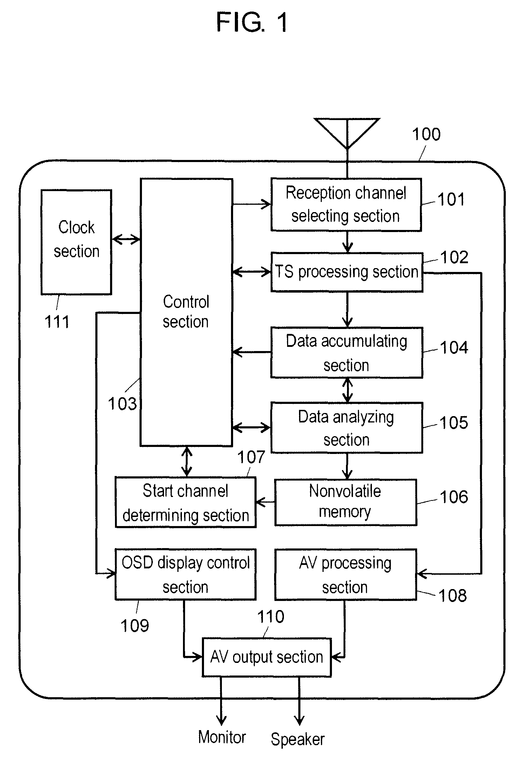

) Fig. 1 is a block diagram showing a configuration of digital broadcast receiving device 100 in accordance with a first exemplary embodiment of the present invention. Digital broadcast receiving device 100 includes reception channel selecting section 101, TS processing section 102, control section 103, data accumulating section 104, data analyzing section 105, nonvolatile memory 106, start channel determining section 107, audio visual (AV) processing section 108, on-screen-display (OSD) display control section 109, AV output section 110, and clock section 111.

) In order to acquire a transport stream (hereinafter referred to as "TS") of the channel reported from control section 103, reception channel selecting section 101 applies the channel selecting processing and demodulating processing to received digital broadcast wave. Reception channel selecting section 101 outputs the demodulated TS to TS processing section 102.

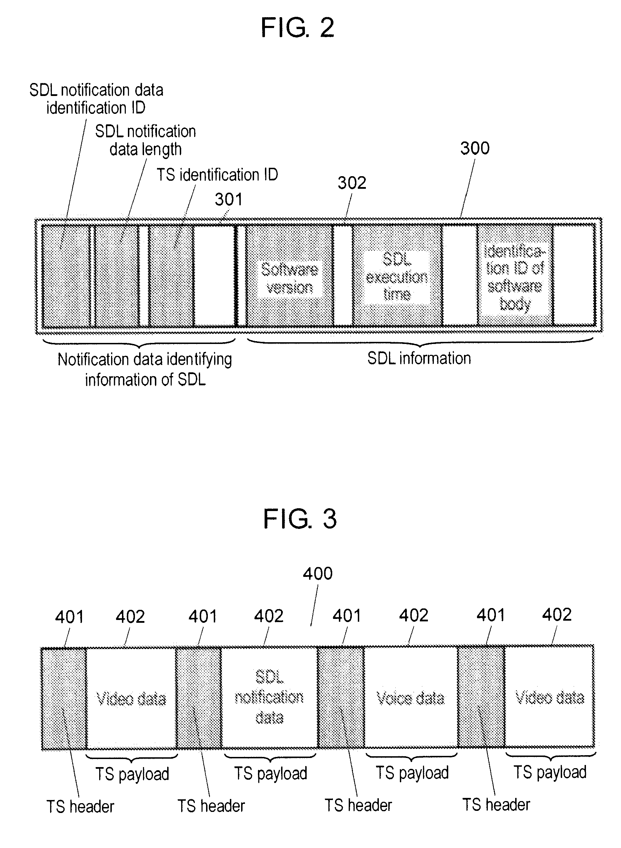

) TS processing section 102 divides the TS that is input from reception channel selecting section 101 into a software body including notification data of an SDL and the contents of the SDL, time information, and an AV stream. TS processing section 102 outputs, to AV processing section 108, the AV stream included in a broadcast program that has been reported from control section 103. TS processing section 102 outputs the SDL notification data and the software body to data accumulating section 104. TS processing section 102 informs control section 103 of the time information. In other words, reception channel selecting section 101 and TS processing section 102, which serve as a receiving section, receive a digital broadcast signal, and acquire the contents of the SDL and the notification data of the SDL from the received digital broadcast signal. Here, the notification data of the SDL includes execution time information of the SDL transmitted prior to the SDL. The structure of the notification data of the SDL is described using Fig. 2 at a later time. The structure of the TS is described using Fig. 3 at a later time.

) Control section 103 informs reception channel selecting section 101, TS processing section 102, and data analyzing section 105 of a broadcast-program selecting command as a broadcast program to be selected by digital broadcast receiving device 100. The broadcast program selecting command is input to control section 103 by remote control (not shown) operation or the like by a user. The broadcast program selecting command is reported to control section 103 also from start channel determining section 107. The broadcast program selecting command is reported also when control section 103 determines that it is the SDL start time. Control section 103 also informs start channel determining section 107 of a power-on command that is input by remote control (not shown) operation or the like by the user. Control section 103 informs OSD display control section 109 of a required OSD display command. Control section 103 informs clock section 111 of the time information that is reported from data accumulating section 104. Control section 103 executes the SDL using the software body of data accumulating section 104. Control section 103 determines whether it is the SDL start time based on the SDL start time that is reported from data analyzing section 105 and the time that is managed by clock section 111. In other words, according to the measured time and the time information that is included in the stored notification data of the SDL, control section 103 makes the receiving section receive the software download channel and acquire the contents of the SDL, and executes the acquired contents of the SDL.

) Data accumulating section 104 accumulates the notification data of the SDL and the software body that are input from TS processing section 102.

) Data analyzing section 105 monitors the notification data of the SDL accumulated in data accumulating section 104. When the notification data of the SDL is accumulated, data analyzing section 105 writes, into nonvolatile memory 106, the channel (as the SDL channel) that is reported from control section 103 and selected by digital broadcast receiving device 100. Data analyzing section 105 informs control section 103 of the SDL execution time included in the notification data of the SDL. In other words, data accumulating section 104 and nonvolatile memory 106 (serve a s a storage section) store the notification data of the SDL and the digital broadcast channel (as the software download channel) for specifying the digital broadcast signal including the notification data of the SDL.

) Start channel determining section 107 determines whether the SDL channel is written in nonvolatile memory 106 according to the power-on command issued from control section 103. When the SDL channel exists, start channel determining section 107 reads the SDL channel, and informs control section 103 of the reading as the channel to be selected in starting.

) AV processing section 108 outputs the AV stream that is input from TS processing section 102 to AV output section 110. Here, the AV stream serves as digital video data and voice data.

) OSD display control section 109 creates required OSD display data based on an OSD display command reported from control section 103, and outputs it to AV output section 110.

) AV output section 110 combines the video data that is input from AV processing section 108 with the OSD display data that is input from OSD display control section 109. AV output section 110 converts the combined data into analog data, and then outputs it as a video signal to a display device such as a monitor. AV output section 110 converts the voice data that is input from AV processing section 108 into analog data. Then, AV output section 110 outputs the converted analog data as a voice signal to a voice output device such as a speaker.

) Clock section 111 adjusts the time inside digital broadcast receiving device 100 based on the time information reported from control section 103. Clock section 111 measures and manages time.

) Fig. 2 is a diagram showing a data format of notification data 300 of SDL of the present exemplary embodiment. Notification data 300 of the SDL, separately from the software body, is multiplexed into digital broadcast wave and transmitted before the SDL execution time. Notification data 300 of the SDL is at least formed of notification data identifying information 301 of the SDL and SDL information 302 as information related to the SDL. Here, information 301 is used for identifying notification data 300 of the SDL in a TS. Notification data identifying information 301 of the SDL includes at least the following data:
SDL notification data identification ID for identifying notification data 300 of the SDL;
SDL notification data length as data length of SDL notification data 300; and
identification ID (TS identification ID) of the TS including SDL notification data 300.
SDL information 302 includes at least the following data:
the version number (software version in Fig. 2) of the software body;
SDL execution time (scheduled start time of the SDL); and
an ID (identification ID of the software body in Fig. 2) for identifying the software body.

) Fig. 3 is a diagram showing a packet structure of the TS in accordance with the first exemplary embodiment of the present invention. As shown in Fig. 3, TS 400 is formed of TS headers 401 and TS payloads 402. TS payloads 402 include AV streams (video data and voice data), SDL notification data, and the software body.

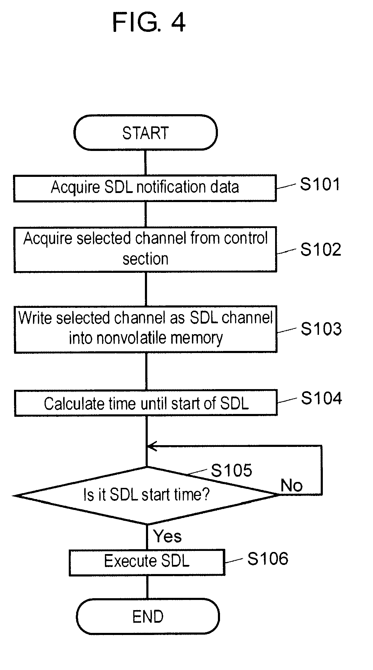

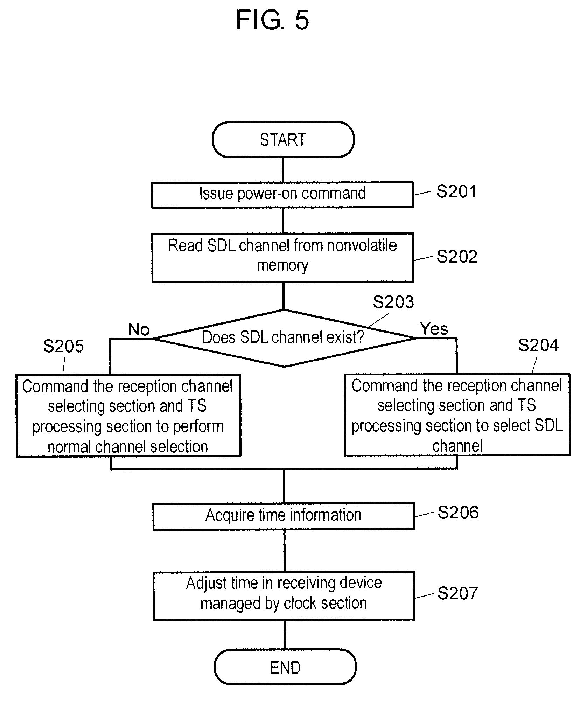

) Next, the processing in which digital broadcast receiving device 100 of the present exemplary embodiment executes the SDL using the time information of the SDL channel is described with reference to the flowcharts of Fig. 4 and Fig. 5. This processing is mainly divided into processing of Fig. 4 of acquiring SDL notification data 300 and executing the SDL, and power-on processing of Fig. 5.

) First, the processing in which digital broadcast receiving device 100 acquires SDL notification data 300 and executes the SDL is described with reference to Fig. 4. Fig. 4 is a flowchart showing the acquiring processing of SDL notification data 300 in accordance with the present exemplary embodiment. First, data analyzing section 105 receives SDL notification data 300 and accumulates SDL notification data 300 into data accumulating section 104 (Step S101). In other words, in the receiving step, the receiving section receives the digital broadcast signal and acquires notification data 300 of the software download from the received digital broadcast signal.

) Next, data analyzing section 105 acquires, from control section 103, the digital broadcast channel (as the SDL channel) that is presently selected by digital broadcast receiving device 100 (Step S102). Data analyzing section 105 writes the SDL channel into nonvolatile memory 106 (Step S103). In other words, the storing step is a step of storing notification data 300 of the software download, and the digital broadcast channel (as the software download channel) for specifying the digital broadcast signal including software download notification data 300.

) Control section 103 calculates period until the start of the SDL based on the SDL start time that is reported from data analyzing section 105 and the time inside digital broadcast receiving device 100 that is managed by clock section 111 (Step S104). In other words, in the measuring step, clock section 111 measures time.

) When it is SDL start time ("YES" in Step S105), the SDL is executed (Step S106). In other words, in the content executing step, the receiving section receives the software download channel according to the updated time and the time information that is included in the stored notification data 300 of the software download. In the content executing step, the contents of the software download are acquired and the acquired contents of the software download are executed.

) When it is not SDL start time ("NO" in Step S105), the process returns to step S105.

) Next, the power-on processing is described using Fig. 5. Fig. 5 is a flowchart showing the power-on processing in accordance with the present exemplary embodiment. When control section 103 issues a power-on command (Step S201), start channel determining section 107 reads the SDL channel from nonvolatile memory 106 (Step S202). When the SDL channel exists ("YES" in Step S203), start channel determining section 107 informs control section 103 of the read SDL channel. Control section 103 commands reception channel selecting section 101 and TS processing section 102 to select the SDL channel (Step S204).

) When the SDL channel does not exist or is disabled ("NO" in Step S203), a normal channel selection command is performed (Step S205). In the normal channel selection command, for example, it is assumed to specify the channel viewed immediately before power-off.

) Next, control section 103 acquires the time information from TS processing section 102 according to the channel selection command (Step S206). Clock section 111, using the time information reported from control section 103, adjusts and updates the time inside digital broadcast receiving device 100 that is managed by clock section 111 (Step S207). In other words, in the time updating step, in the subsequent power-on operation after the power-off operation, the receiving section receives the software download channel stored in the storing step, and updates the time measured by clock section 111 based on the time information included in the received digital broadcast signal.

) As discussed above, in the subsequent power-on operation after the power-off operation, control section 103 of digital broadcast receiving device 100 of the present embodiment makes the receiving section receive the software download channel stored in the storage section. Then, control section 103 acquires the time information included in the received digital broadcast signal. Next, control section 103 updates the time measured by clock section 111 according to the time information included in the acquired software download channel.

) Therefore, in the present embodiment, when the power-off processing is performed after acquiring of SDL notification data 300, the SDL channel is firstly started in the subsequent power-on processing. The time information of the SDL channel can be received and acquired by selecting the SDL channel. Therefore, digital broadcast receiving device 100 can acquire the time information as the reference for determining the SDL execution time. As a result, the SDL start time can be correctly determined, and the SDL channel can be selected at the start of the delivery of the SDL contents.

) In Fig. 4, since SDL notification data 300 is stored in nonvolatile memory 106, SDL notification data 300 does not need to be acquired even when the power-off processing is performed, for example.

) The execution of the SDL is taken as an example where any channel is selected at a determined time based on the time information of the channel. For example, also in program reservation using the time information about the program start included in program list data, determination of the reservation start requires the time information in digital broadcast receiving device 100 that has been adjusted according to the time information of the channel to be reserved. A similar problem exists therefore. In other words, the program reservation is also a target of the present invention, and the present invention is not limited to the SDL.

### (SECOND EXEMPLARY EMBODIMENT)

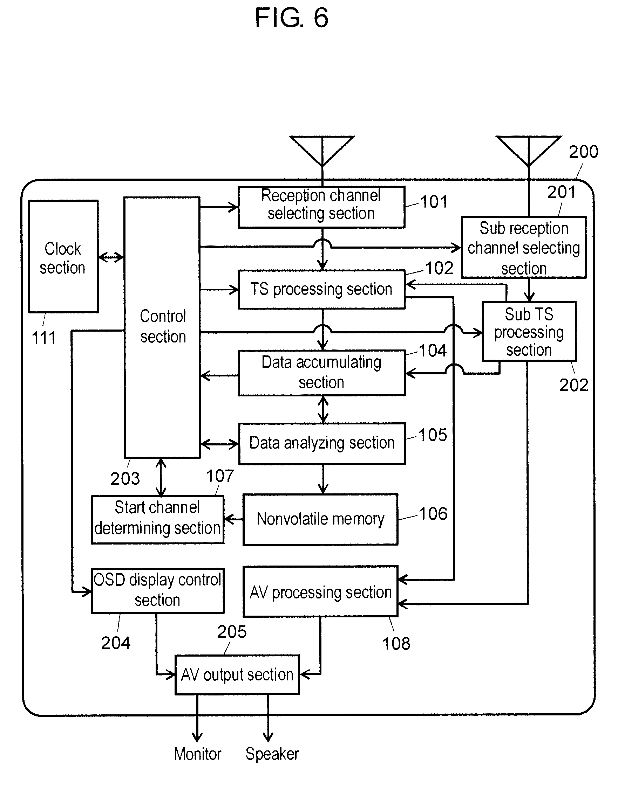

) Fig. 6 is a block diagram showing a digital broadcast receiving device 200 in accordance with a second exemplary embodiment of the present invention. The digital broadcast receiving device of the second embodiment differs from that of the first embodiment in the following points:
the receiving device has a reception channel selecting section with two systems and a TS processing section with two systems; and
the receiving device can simultaneously receive TSs for two channels.
Here, elements similar to those in Fig. 1 are denoted with the same reference marks, and the descriptions of those elements are omitted.

) Digital broadcast receiving device 200 includes reception channel selecting section 101, TS processing section 102, control section 203, data accumulating section 104, data analyzing section 105, nonvolatile memory 106, start channel determining section 107, AV processing section 108, clock section 111, OSD display control section 204, AV output section 205, sub reception channel selecting section 201, and sub TS processing section 202.

) Sub reception channel selecting section 201 applies channel selecting processing and demodulation to the received digital broadcast wave in order to acquire the TS of the broadcast program reported from control section 203. Sub reception channel selecting section 201 outputs the demodulated TS to sub TS processing section 202.

) Sub TS processing section 202 divides the TS that is input from sub reception channel selecting section 201 into SDL notification data 300, software body which is the SDL contents, time information, and an AV stream. Sub TS processing section 202 outputs, to AV processing section 108, the AV stream included in the broadcast program that is reported from control section 203. Sub TS processing section 202 outputs SDL notification data 300 and the software body to data accumulating section 104. Similarly to the first embodiment, data accumulating section 104 and nonvolatile memory 106 (serve as a storage section) store, as the software download channel, SDL notification data 300 and the digital broadcast channel for specifying the digital broadcast signal including SDL notification data 300. Sub TS processing section 202 informs control section 203 of the time information. Sub reception channel selecting section 201 and sub TS processing section 202 (serve as a sub receiving section) receive a digital broadcast signal, and acquire the SDL contents and SDL notification data 300 from the received digital broadcast signal.

) Control section 203 informs sub reception channel selecting section 201 and TS processing section 202 of a broadcast program selecting command which indicates a broadcast program to be selected by digital broadcast receiving device 200. The broadcast program selecting command is input to control section 203 by remote control (not shown) operation or the like by a user. The broadcast program selecting command is reported to control section 203 also from start channel determining section 107. The broadcast program selecting command is reported also when control section 203 determines that it is the SDL start time. Control section 203 also informs start channel determining section 107 of a power-on command that is input by remote control (not shown) operation or the like by the user. Control section 203 also informs OSD display control section 204 of a two-screen display command that is input by remote control (not shown) operation or the like by the user and an OSD display command required for OSD display. Control section 203 informs clock section 111 of the time information that is reported from data accumulating section 104. Control section 203 executes the SDL using the software body of data accumulating section 104. Control section 203 determines whether it is the SDL start time based on the SDL start time that is reported from data analyzing section 105 and the time inside digital broadcast receiving device 200 that is managed by clock section 111.

) In other words, according to the measured time and the time information that is included in stored SDL notification data 300, control section 203 makes the sub receiving section receive the software download channel and acquire the SDL contents, and executes the acquired SDL contents. When the sub receiving section can receive the contents of the software download, control section 203 makes the sub receiving section receive the software download channel in the subsequent power-on operation after the power-off operation. Control section 203 makes the sub receiving section acquire the time information included in the digital broadcast signal that has been received by the sub receiving section. Next, control section 203 updates the time measured by clock section 111 based on the time information included in the acquired software download channel.

) OSD display control section 204 creates OSD display data required for OSD display based on the two-screen display command and the OSD display command that are reported from control section 203. OSD display control section 204 outputs the two-screen display command and the created OSD display data to AV output section 205.

) AV output section 205, according to the two-screen display command that is input from OSD display control section 204, determines an output screen structure, and combines the video data that is input from AV processing section 108 with the OSD display data that is input from OSD display control section 204. AV output section 205 converts the combined video data and OSD display data into analog data, and then outputs them as a video signal to a display device such as a monitor. AV output section 205 converts the voice data that is input from AV processing section 108 into analog data. Then, AV output section 205 outputs the converted analog data as a voice signal to a voice output device such as a speaker.

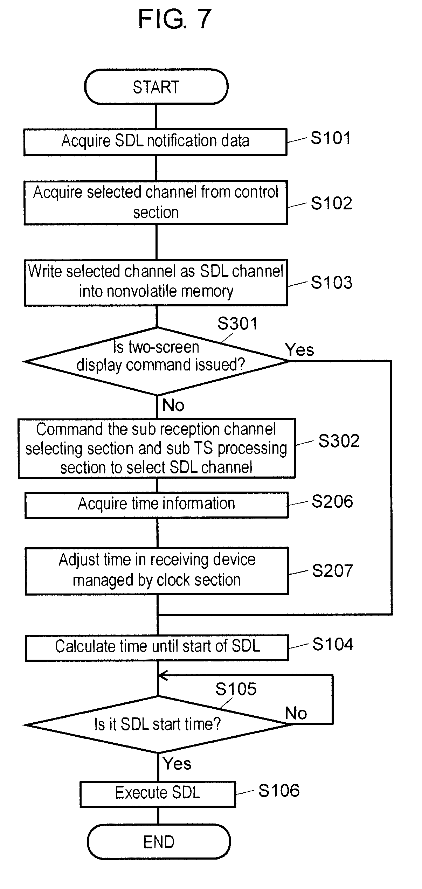

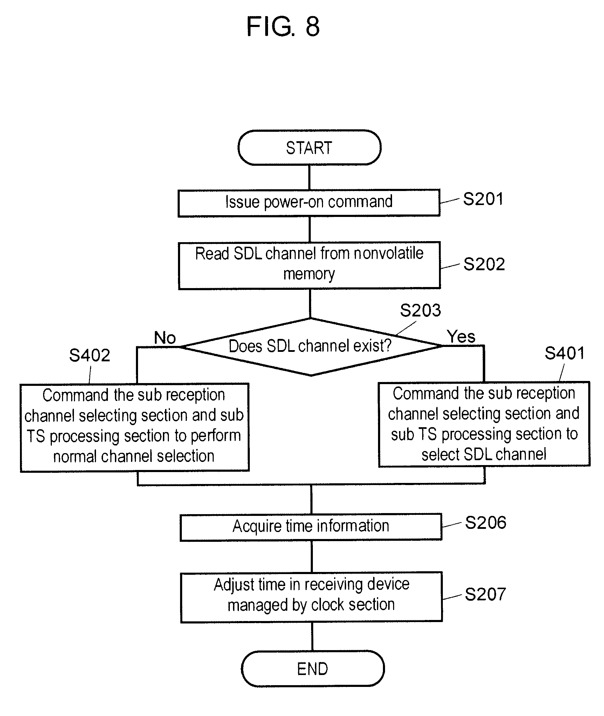

) Next, the processing of executing the SDL based on the time information of the SDL channel is described with reference to the flowcharts of Fig. 7 and Fig. 8. In this execution, receiving control and TS processing by sub reception channel selecting section 201 and sub TS processing section 202 of the second embodiment of the present invention are used This processing is mainly divided into the processing of Fig. 7 of acquiring SDL notification data 300 and executing the SDL, and the power-on processing of Fig. 8. Processings similar to those in Fig. 4 and Fig. 5 are denoted with the same reference marks, and the descriptions of those processings are omitted.

) First, the processing of acquiring SDL notification data 300 and executing the SDL is described with reference to Fig. 7. Fig. 7 is a flowchart showing the acquiring processing of SDL notification data 300 in accordance with the present exemplary embodiment. First, when data analyzing section 105 can receive SDL notification data 300 into data accumulating section 104 (Step S101), data analyzing section 105 acquires, from control section 203, the channel selected by digital broadcast receiving device 200 (Step S102). Data analyzing section 105 writes the channel as the SDL channel into nonvolatile memory 106 (Step S103). When the sub receiving section can receive the software download channel, namely when the receiving control and the TS processing by sub reception channel selecting section 201 and sub TS processing section 202 can be used by control of control section 203 or when the two-screen display command is not issued ("NO" in Step S301), sub reception channel selecting section 201 and sub TS processing section 202 are commanded to select the SDL channel (Step S302). Control section 203 acquires the time information from sub TS processing section 202 in response to the channel selection command.

) In other words, in the receiving step, the sub receiving section receives the software download channel, and acquires notification data 300 of the software download from the received digital broadcast signal. Clock section 111 adjusts the time inside digital broadcast receiving device 200 that is managed by clock section 111 using the time information that is reported from control section 103 (Step S207).

) As a result, digital broadcast receiving device 200 can acquire the time information in the SDL channel and execute the SDL without changing the channel viewed by a user. In other words, in the content executing step, the sub receiving section receives the software download channel according to the updated time and the time information that is included in the stored notification data of the software download. In the content executing step, the contents of the software download are acquired and the acquired contents of the software download are executed.

) When the two-screen display command is issued ("YES" in Step S301), the process goes to step S104. The later steps are the same as those in the first exemplary embodiment, and the descriptions are omitted.

) Next, the power-on processing is described using Fig. 8. Fig. 8 is a flowchart showing the power-on processing in accordance with the present exemplary embodiment. When control section 203 issues a power-on command (Step S201), start channel determining section 107 reads the SDL channel from nonvolatile memory 106 (Step S202). When the SDL channel exists ("YES" in Step S203), start channel determining section 107 informs control section 203 of the read SDL channel. Control section 203 commands sub reception channel selecting section 201 and sub TS processing section 202 to select the SDL channel (Step S401).

) When the SDL channel does not exist or is disabled ("NO" in Step S203), a normal channel selection command is issued (Step S402). In the normal channel selection command, for example, it is assumed to specify the channel viewed immediately before power-off.

) Control section 203 acquires the time information from sub TS processing section 202 according to the channel selection command (Step S206). Clock section 111, using the time information reported from control section 103, adjusts the time inside digital broadcast receiving device 200 that is managed by clock section 111 (Step S207). In other words, in the time updating step, in the subsequent power-on operation after a power-off operation, the time measured by clock section 111 is updated based on the time information included in the digital broadcast signal that has been received by the sub receiving section.

) In Fig. 6, the number of clock sections 111 is one. Clock section 111 may have two systems, similarly to the reception channel selecting section and the TS processing section, and clock section 111 may manage time for each selected channel.

) In the present embodiment, when the reception channel selection and TS processing by the sub receiving section are not used in two-screen display or the like after acquiring SDL notification data 300, the time information of the SDL channel can be always acquired using the reception channel selection and TS processing of the sub receiving section, and the SDL execution time can be correctly determined.

) After the power-off processing is performed, when only the reception channel selection and TS processing by the sub receiving section are started from the SDL channel in the subsequent power-on processing, the time information of the SDL channel can be acquired without disturbing the viewing of the user. As a result, the SDL start time can be correctly determined, and the SDL channel can be selected when the delivery of the SDL contents is started.

) The execution of the SDL is taken as an example where any channel is selected at a determined time based on the time information of the channel. However, even in program reservation using the time information of the program start included in the program list data, for example, determination of the reservation start requires the time information in digital broadcast receiving device 200 that has been adjusted with the time information of the channel to be reserved. Therefore, a similar problem is caused even in the program reservation. In other words, the program reservation also becomes a target of the present invention, and the present invention is not limited to the SDL.

) In Fig. 6, each of the reception channel selecting section and the TS processing section has two systems. The present invention is not limited to two systems. Each of the reception channel selecting section, the TS processing section, and the clock section may have a plurality of systems.

### INDUSTRIAL APPLICABILITY

) The digital broadcast receiving device of the present invention, in selecting a predetermined channel at a predetermined time, can correctly determine the predetermined time based on the correct time information. The digital broadcast receiving device is useful for an apparatus having a reserving function and a download function of the software

### REFERENCE MARKS IN THE DRAWINGS

100, 200 digital broadcast receiving device
101 reception channel selecting section (receiving section)
102 TS processing section
103, 203 control section
104 data accumulating section
105 data analyzing section
106 nonvolatile memory
107 start channel determining section
108 AV processing section
109, 204 OSD display control section
110, 205 AV output section
111 clock section
201 sub reception channel selecting section
202 sub TS processing section
300 notification data
301 notification data identifying information

## Claims

1. A digital broadcast receiving device comprising:
a receiving section for receiving a digital broadcast signal, and acquiring contents of software download and notification data of the software download from the received digital broadcast signal;
a storage section for storing the notification data of the software download, and a digital broadcast channel that specifies a digital broadcast signal including the notification data of the software download, the digital broadcast channel serving as a software download channel;
a clock section for measuring time; and
a control section for making the receiving section receive the software download channel and acquire the contents of the software download, and for executing the acquired contents of the software download, according to the measured time and time information that is included in the stored notification data of the software download,
wherein, in a subsequent power-on operation after a power-off operation, the control section makes the receiving section receive the software download channel stored in the storage section, acquires time information included in the received digital broadcast signal, and updates the time measured by the clock section based on the time information included in the acquired software download channel.

2. The digital broadcast receiving device of claim 1, further comprising a sub receiving section for receiving the digital broadcast signal and for acquiring the contents of the software download and the notification data of the software download from the received digital broadcast signal,
wherein, when the sub receiving section can receive the contents of the software download, and in a subsequent power-on operation after a power-off operation, the control section makes the sub receiving section receive the software download channel, acquires time information included in the received digital broadcast signal, and updates the time measured by the clock section based on the time information included in the acquired software download channel.

3. A digital broadcast receiving method comprising:
a receiving step of receiving a digital broadcast signal and acquiring notification data of software download from the received digital broadcast signal with a receiving section;
a storage step of storing the notification data of the software download, and storing a digital broadcast channel that specifies a digital broadcast signal including the notification data of the software download, the digital broadcast channel serving as a software download channel;
a measuring step of measuring time with a clock section;
a time updating step of, in a subsequent power-on operation after a power-off operation, receiving the software download channel stored in the storage step with the receiving section, and updating the time measured by the clock section based on time information included in the received digital broadcast signal; and
a content executing step of receiving the software download channel and acquiring the contents of the software download with the receiving section, and executing the acquired contents of the software download, according to the updated time and the time information that is included in the stored notification data of the software download.

4. The digital broadcast receiving method of claim 3, wherein
the receiving step includes receiving a software download channel and acquiring notification data of software download from the received digital broadcast signal with a sub receiving section, the sub receiving section acquiring the contents of the software download and the notification data of the software download from the received digital broadcast signal,
the time updating step includes, in a subsequent power-on operation after a power-off operation, updating the time measured by the clock section based on time information included in the digital broadcast signal that has been received by the sub receiving section, and
the content executing step includes receiving the software download channel and acquiring the contents of the software download with the sub receiving section, and executing the acquired contents of the software download, according to the updated time and the time information that is included in the stored notification data of the software download.
